# EUROPEAN PATENT SPECIFICATION

(11) **EP 2 843 391 B1**
(45) Date of publication and mention of the grant of the patent: **13.06.2018**
(21) Application number: 13780599.0
(22) Date of filing: 18.04.2013
(51) Int. Cl.: G01N 15/06, G01N 27/62, F02D 41/22

(54) **FINE PARTICLE SENSING SYSTEM**
SYSTEM ZUR ERFASSUNG FEINER PARTIKEL
SYSTÈME DE DÉTECTION DE PARTICULES FINES

(30) Priority: 23.04.2012 JP 2012097567
(43) Date of publication of application: 04.03.2015
(73) Proprietor: NGK Sparkplug Co., Ltd., Nagoya-shi, Aichi 467-8525 (JP)
(72) Inventor: JANKA, Kauko, Nagoya-shi Aichi 467-8525 (JP)
(74) Representative: Grünecker Patent- und Rechtsanwälte PartG mbB
(86) International application number: PCT/JP2013/002616
(87) International publication number: WO 2013/161226

(56) References cited:
- WO-A1-2010/061327
- JP-A- 2007 514 923
- JP-A- 2011 513 742
- NTZIACHRISTOS L ET AL: "Exhaust particle sensor for OBD application", SAE TECHNICAL PAPER SERIES; SAE 2011 WORLD CONGRESS AND EXHIBITION, SOCIETY OF AUTOMOTIVE ENGINEERS, WARRENDALE, PA, US; DETROIT, MICHIGAN, USA, no. 2011-01-0626, 1 January 2011 (2011-01-01), pages 1-14, XP008163336, ISSN: 0148-7191 [retrieved on 2011-04-12]
- FRANCISCO J. ROMAY ET AL: "A Sonic Jet Corona Ionizer for Electrostatic Discharge and Aerosol Neutralization", AEROSOL SCIENCE AND TECHNOLOGY, vol. 20, no. 1, 1 January 1994 (1994-01-01), pages 31-41, XP055022567, ISSN: 0278-6826, DOI: 10.1080/02786829408959661

## Description

### TECHNICAL FIELD

The present invention relates to a particulate (fine particle) detection (sensing) system for detecting the quantity of particulates contained in a gas.
A generic system in accordance with the preamble of claim 1 is for instance known from Ntziachristos, L. et al.; "Exhaust Particle Sensor for OBD Application", SAE Technical Paper series; SAE 2011 World Congress and Exhibition Society of Automotive Engineers PA, US; Detroit, Michigan, USA, 2011-01-0626, January 1, 2011, pages 1 to 14.

### BACKGROUND ART

Measurement of the quantity of particulates contained in a gas is demanded in some situations. For example, exhaust gas discharged from an internal combustion engine (for example, a diesel engine or a gasoline engine) may contain particulates such as soot.

A gas containing such particulates is purified by means of collecting the particulates through use of a filter. Also, when necessary, the filter is heated to a high temperature so as to burn and remove particulates having accumulated on the filter. Therefore, if the filter suffers breakage or a like failure, unpurified gas is discharged directly to the downstream of the filter.

Therefore, there has been demanded a particulate detection system which can detect the quantity of particulates contained in a gas in order to directly measure the quantity of particulates contained in the gas or to detect a failure of the filter.

For example, WO2009/109688 A1 discloses a particulate measurement processing method and apparatus. WO2009/109688 A1 discloses a method of mixing an ionized gas containing positive ions with a gas introduced into a channel and containing particulates, to thereby charge or electrify the particulates, and then releasing the charged particulates. The method detects a current (signal current) which flows in accordance with the quantity of the released, charged particulates, to thereby detect the particulate concentration.
A sonic jet corona Ionizer is likewise disclosed in Francisco J. Romay et al.; "A Sonic Jet Corona Ionizer for Electrostatic Discharge and Aerosol Neutralization", Aerosol Science and Technology, Vol. 20, No.1, January 1, 1994, pages 31 to 41.

### SUMMARY OF THE INVENTION

### PROBLEMS TO BE SOLVED BY THE INVENTION

In this particulate detection system, ions produced by an ion source are jetted together with compressed air, particulates contained in a gas are mixed with the ions in a mixing region in a particulate electrification section, and the quantity of particulates is detected from the quantity of electrified particulates discharged from the mixing region. However, the particulate detection system becomes impossible to detect the quantity of particulates if a nozzle for jetting the compressed air is clogged and the ions are not normally jetted together with compressed air. However, when it has become impossible for the ions to be jetted normally together with the compressed air due to clogging of the nozzle or other causes, the particulate detection system cannot detect such a situation properly.

The present invention has been accomplished in view of such a problem, and its object is to provide a particulate detection system which can properly detect the quantity of particulates contained in a gas and which can properly detect a state in which the injection quantities of compressed air and ions have decreased due to, for example, clogging of a nozzle.

### MEANS FOR SOLVING THE PROBLEMS

The present invention for solving the above-described problems is a particulate detection system according to the appended claims for detecting a quantity of particulates contained in a gas, comprising a detection section which comes into contact with the gas; circuits for driving the detection section and detecting the quantity of the particulates; and a compressed air port into which compressed air flows. The detection section includes an ion gas jetting source which produces ions through gaseous discharge and which has a nozzle member forming a nozzle for jetting the produced ions together with the compressed air having flowed through the compressed air port; a particulate electrification section which has an intake port for introducing the gas into the particulate electrification section, which defines a mixing region where the gas introduced through the intake port is mixed with the ions jetted from the ion gas jetting source, whereby the ions adhere to the particulates in the introduced gas and electrified particulates are produced, the particulate electrification section having an exhaust port for exhausting the electrified particulates together with the introduced gas, and forming a collection electrode which is maintained at a collection electrode potential and which collects floating ions which are ions not having adhered to the particulates; and an auxiliary electrode which is disposed in the particulate electrification section, which is connected to a variable auxiliary electrode power supply circuit which is one of the circuits and is maintained at an auxiliary electrode potential, and which exerts a repulsive force on the floating ions to thereby assist the collection electrode in collecting the floating ions. The auxiliary electrode potential is a variable potential which varies in relation to the collection electrode potential, and is produced by the variable auxiliary electrode power supply circuit. The potential difference between the auxiliary electrode potential and the collection electrode potential is defined as a trap voltage. When the trap voltage is set to a voltage equal to or higher than a lowest prevention voltage under a condition that the particulates do not flow into the mixing region and the flow rate of the compressed air and the quantity of the ions which are jetted from the nozzle toward the mixing region are constant, the detection section can prevent production of exhausted floating ions which are floating ions exhausted from the exhaust port without being collected by the collection electrode. When the trap voltage is set to a voltage lower than the lowest prevention voltage under the same condition, the quantity of the exhausted floating ions and the trap voltage have an exhausted floating ion quantity - trap voltage characteristic in which the quantity of the exhausted floating ions increases as the trap voltage decreases. The detection section has a characteristic in which, as the flow rate of the compressed air jetted from the nozzle decreases, the lowest prevention voltage decreases, and a range in which the exhausted floating ion quantity - trap voltage characteristic is attained shifts toward a side where the trap voltage is low. The particulate detection system comprises index detection means for changing the trap voltage and obtaining an index trap voltage which is a trap voltage corresponding to a predetermined quantity (including 0) of the exhausted floating ions, and determination means for determining whether or not the index trap voltage is higher than a permissible voltage.

This particulate detection system includes index detection means for obtaining an index trap voltage which is a trap voltage corresponding to a predetermined quantity (including 0) of exhausted floating ions, and determination means for determining whether or not the index trap voltage is higher than a permissible voltage.

By virtue of these means, the present system can properly detect the quantity of particulates contained in the gas, and can properly detect a state in which the injection quantity of ions decreases, along with a decrease in the injection quantity of compressed air, due to, for example, clogging of the nozzle.

The "trap voltage" is the potential difference between the auxiliary electrode potential and the collection electrode potential.

The "lowest prevention voltage" refers to a lowest trap voltage at which production of exhausted floating ions which are floating ions exhausted from the exhaust port without being collected by the collection electrode can be prevented. The lowest trap voltage is determined by changing the trap voltage under a condition that the particulates do not flow into the mixing region and the flow rate of the compressed air and the quantity of the ions which are jetted from the nozzle toward the mixing region are constant. Notably, in the case of a system which is attached to an exhaust pipe of a vehicle and which detects the quantity of particulates contained in exhaust gas, the condition that particulates do not flow into the mixing region is satisfied before the engine of the vehicle is started or after the engine is stopped.

The "exhausted floating ion quantity - trap voltage characteristic" of the detection section refers to a characteristic in which the quantity of the exhausted floating ions increases as the trap voltage decreases. The detection section exhibits this characteristic when the trap voltage is set to a voltage equal to or lower than the lowest prevention voltage under the above-mentioned condition that the particulates do not flow into the mixing region and the flow rate of the compressed air and the quantity of the ions which are jetted from the nozzle toward the mixing region are constant.

Further, the detection section has a characteristic in which, as the flow rate of the compressed air jetted from the nozzle decreases, the lowest prevention voltage decreases, and the range in which the detection section exhibits the "exhausted floating ion quantity - trap voltage characteristic" shifts toward a side where the trap voltage is low.

The quantity of the exhausted floating ions can be determined, for example, by a method in which a signal current detection circuit which detects a signal current which changes in accordance with the quantity of the exhausted floating ions and the quantity of the electrified particulates exhausted from the exhaust port is used to measure the signal current under a condition that no electrified particulate is produced. This is because, since the quantity of electrified particulates is zero, the signal current changes in accordance with the quantity of the exhausted floating ions.

The "index trap voltage" refers to a trap voltage which corresponds to a predetermined quantity (including 0) of the exhausted floating ions and which is determined in accordance with the exhausted floating ion quantity - trap voltage characteristic.

The "predetermined quantity of the exhausted floating ions" may be a certain fixed quantity of the exhausted floating ions or a quantity of the exhausted floating ions within a certain fixed range. Accordingly, in the case where the signal current which changes in accordance with the quantity of the exhausted floating ions is detected, the index trap voltage may be a trap voltage at which a predetermined signal current Is (e.g., Is = 1000 pA) (corresponding to a certain fixed quantity of the exhausted floating ions) is obtained. Alternatively, the index trap voltage may be a trap voltage at which the signal current Is falls within a predetermined range (e.g., a range of 500 to 1000 pA) (corresponding to a certain fixed range of the quantity of the exhausted floating ions).

The value of this index trap voltage decreases as the flow rate of the compressed air jetted from the nozzle decreases. Specifically, when an index trap voltage required to exhaust the predetermined quantity of exhausted floating ions from the detection section in a state in which the flow rate of the compressed air is set to a predetermined fixed flow rate is compared with an index trap voltage required to exhaust the same quantity of exhausted floating ions from the detection section in a state in which the flow rate of the compressed air has decreased from the above-mentioned fixed flow rate, the latter index trap voltage assumes a lower value.

The present system includes "index detection means" for obtaining such an index trap voltage. Specifically, for example, a microprocessor which performs various types of controls in the above-described "circuits for driving the detection section and detecting the quantity of particulates" (hereinafter, also referred to as "drive/detection circuits") of the present system can be used as the index detection means. Alternatively, separately from the above-mentioned microprocessor, a microprocessor or the like configured to obtain the above-described index trap voltage may be provided in the drive/detection circuits or outside the drive/detection circuits as the index detection means. Alternatively, an ECU (electronic control unit) which controls an internal combustion engine or the like (specifically, a microprocessor provided in the ECU) may be used as the index detection means.

The determination means determines whether or not the index trap voltage is higher than the permissible voltage. Notably, in the case where the index trap voltage is lower than the permissible voltage, it is considered that, due to, for example, clogging of the nozzle, the compressed air is not injected normally (the flow rate is small or the compressed air is not injected), or the quantity of injected ions has decreased.

The present system includes such a "determination means." Specifically, for example, a microprocessor which performs various types of controls in the drive/detection circuits of the present system can be used as the determination means. Alternatively, separately from the above-mentioned microprocessor, a microprocessor or the like configured to determine whether or not the above-described index trap voltage is higher than the permissible voltage may be provided in the drive/detection circuits or outside the drive/detection circuits as the determination means. Alternatively, an ECU (electronic control unit) which controls an internal combustion engine or the like (specifically, a microprocessor provided in the ECU) may be used as the determination means.

Notably, an example of the gaseous discharge generated at the ion gas jetting source is corona discharge. Also, two electrodes for discharge may be disposed such that the two electrodes face each other and gaseous discharge occurs therebetween, or may be disposed such that the two electrodes are located adjacent to each other on a substrate and (gaseous) creeping discharge occurs therebetween.

Examples of the compressed air source which produces the compressed air flowing into the compressed air port include a reciprocal compressor, a scroll compressor, and various types of pressure pumps which produce compressed air and feed the compressed air under pressure.

No limitation is imposed on the gas for which particulate detection is performed. Examples of such a gas include exhaust gas exhausted from an engine, the atmosphere, and various types of gases flowing through pipes. In particular, it is preferred that particulate detection be performed for a gas containing soot or particulate foreign matters (particulates).

Also, the determination as to whether or not the index trap voltage is higher than the permissible voltage may be performed at a proper timing. In the case where the system is installed in a vehicle, examples of such timing include a point in time before the engine is started, a point in time after the engine is stopped, and a point in time during a period during which the supply of fuel is cut (e.g., during a period of engine braking). Also, the determination may be performed before the engine is started or after the engine stopped every time the vehicle is used, or may be performed at arbitrary intervals, for example, every 10 days or every month.

Preferably, the above-described particulate detection system is configured such that the circuit includes a signal current detection circuit for detecting a signal current which changes in accordance with the quantity of the exhausted floating ions and the quantity of the electrified particulates exhausted from the exhaust port; the index trap voltage is a 1-2 index trap voltage which is lower than the lowest prevention voltage and at which the signal current detected by the signal current detection circuit falls within a range between a first threshold value and a second threshold value larger than the first threshold value; the index detection means changes the trap voltage and obtains the 1-2 index trap voltage by using the signal current detected by the signal current detection circuit; and the determination means determines whether or not the obtained 1-2 index trap voltage is higher than the permissible voltage.

In the case where particulates contained in a gas is detected by the present system with the trap voltage set to a voltage higher than the lowest prevention voltage, the magnitude of the signal current usually obtained due to presence of the particulates is not so large (e.g., about several hundreds pA) in many cases. In contrast, in a range within which the trap voltage is lower than the lowest prevention voltage, the quantity of the exhausted floating ions; i.e., the magnitude of the signal current corresponding thereto changes greatly as a result of a slight change in the trap voltage. Therefore, in some cases, due to influence of noise, etc., it is difficult to accurately obtain the trap voltage at the time when the quantity of the exhausted floating ions reaches a predetermined certain quantity; i.e., when the magnitude of the signal current becomes a predetermined certain value. Meanwhile, the determination as to whether or not the flow rate of the compressed air has decreased can be made without accurately obtaining such a value of the trap voltage.

In view of this, the present system has a signal current detection circuit for detecting the above-mentioned signal current. The index detection means changes the trap voltage, and obtains the 1-2 index trap voltage by using the signal current detected by the signal current detection circuit, and the determination means determines whether or not the obtained 1-2 index trap voltage is higher than the permissible voltage.

As described above, the index trap voltage can be simply obtained by detecting the signal current and obtaining the 1-2 index trap voltage at which the signal current falls within the range from the first threshold value to the second threshold value. Also, by virtue of this, the determination as to whether or not the obtained 1-2 index trap voltage is higher than the permissible voltage can be readily made by the determination means.

In any of the above-described particulate detection systems, preferably, the gas is exhaust gas flowing through an exhaust pipe, and the detection section is attached to the exhaust pipe.

Exhaust gas often contains soot (particulates). Also, when the detection section of the system is attached to the exhaust pipe, the detection section is exposed to the exhaust gas for a long period of time. Therefore, clogging of the nozzle may occur. Such clogging of the nozzle cannot be detected by means of visual checking or the like unless the detection section is detached from the exhaust pipe.

In the present system, a variation (decrease) of the index trap voltage caused by, for example, clogging of the nozzle can be detected by the determination means. Therefore, a failure such as clogging of the nozzle can be readily detected.

### BRIEF DESCRIPTION OF DRAWINGS

[FIG. 1] Explanatory view schematically showing the configuration of a particulate detection system according to an embodiment.
[FIG. 2] Explanatory view schematically showing introduction of particulates into a particulate electrification section of the particulate detection system according to the embodiment, electrification of the particulates, and release of the electrified particulates from the particulate electrification section.
[FIG. 3] Graph showing the relation between the quantity of exhausted floating ions and trap voltage in the particulate detection system according to the embodiment.
[FIG. 4] Graph showing, on an enlarged scale, a range of the graph of FIG. 3 showing the relation between the quantity of exhausted floating ions and the trap voltage, in which range the quantity of exhausted floating ions is very small.
[FIG. 5] Graph showing the relation between signal current and the trape voltage in the particulate detection system according to the embodiment.
[FIG. 6] Graph showing, on an enlarged scale, a range of the graph of FIG. 5 showing the relation between the signal current and the trap voltage, in which range the signal current is very small (2000 pA or less).
[FIG. 7] Flowchart showing operation of the particulate detection system according to the embodiment.
[FIGS. 8A and 8B] Flowcharts showing the details of a nozzle clogging checking subroutine performed in the particulate detection system according to the embodiment.

### MODE FOR CARRYING OUT THE INVENTION

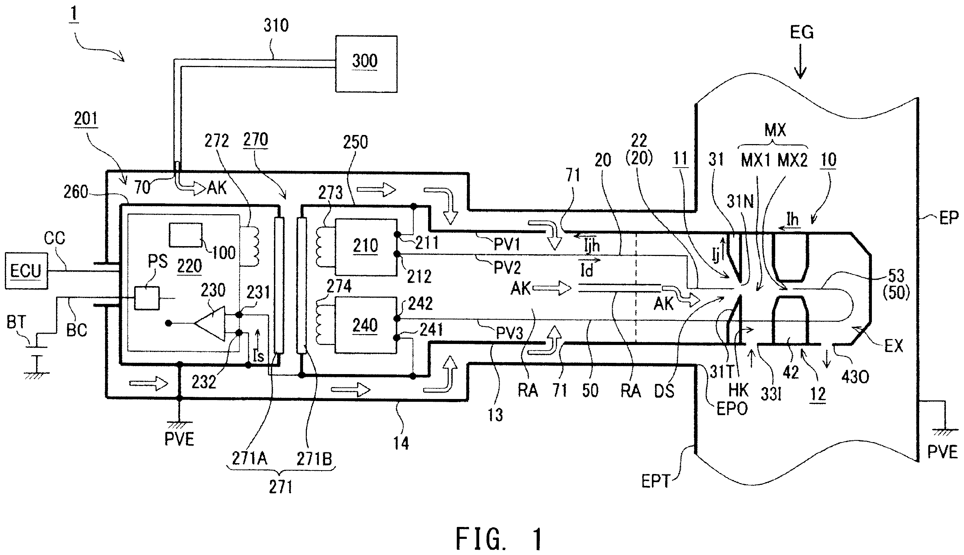

A particulate detection system 1 according to the present embodiment will be described with reference to the drawings. The particulate detection system 1 of the present embodiment (see FIG. 1) is mainly composed of a detection section 10, a circuit section 201, and a pressure pump 300 which is a compressed air source for producing compressed air AK.

The detection section 10 is attached to a mount portion EPT of an exhaust pipe EP of an internal combustion engine (not shown) mounted on a vehicle (not shown). The mount portion EPT has a mount opening EPO formed therein. A portion of the detection section 10 (located on the right side (distal end side) of the mount portion EPT in FIG. 1) extends into the interior of the exhaust pipe EP through the mount opening EPO.

The circuit section 201 is connected to the detection section 10 at a location outside the exhaust pipe EP. This circuit section 201 includes circuits for driving the detection section 10 and detecting a signal current Is which will be described later.

The particulate detection system 1 includes an armoring member 14 which surrounds the circumference of the circuit section 201 and a portion of the detection section 10 located outside the exhaust pipe EP. This armoring member 14 has a compressed air port 70 into which the compressed air AK supplied from the pressure pump 300 flows.

First, the electrical configuration of the circuit section 201 of the present system 1 will be described. The circuit section 201 includes a measurement control circuit 220, an ion source power supply circuit 210, and a variable auxiliary electrode power supply circuit 240.

The ion source power supply circuit 210 has a first output terminal 211 maintained at a first potential PV1 and a second output terminal 212 maintained at a second potential PV2. Specifically, the second potential PV2 is maintained at a positive high potential in relation to the first potential PV1. More specifically, a pulse voltage (1 to 2 kVO-p) which is positive in relation to the first potential PV1 is output from the second output terminal 212. The pulse voltage is obtained through half-wave rectification of a sinusoidal wave of about 100 kHz. Notably, the ion source power supply circuit 210 constitutes a constant-current power supply whose output current is feedback-controlled such that the output current (rms value) is autonomously maintained at a predetermined current value (for example, 5 µA).

The variable auxiliary electrode power supply circuit 240 has an auxiliary first output terminal 241 maintained at the first potential PV1, and an auxiliary second output µterminal 242 maintained at an auxiliary electrode potential PV3. At the time of ordinary particulate detection, this auxiliary electrode potential PV3 is set to a predetermined potential which is a high positive DC potential in relation to the first potential PV1 but is lower than the peak potential (1 to 2 kV) of the second potential PV2. Specifically, the variable auxiliary electrode power supply circuit 240 outputs a predetermined ordinary trap voltage Vt0 (e.g., DC 150 V) (Vt0 = 150 V) which appears as a potential difference (trap voltage Vt) between the auxiliary electrode potential PV3 and the first potential PV1. The variable auxiliary electrode power supply circuit 240 can change its output voltage. Accordingly, when an operation of checking clogging of a nozzle 31N of a nozzle member 31 which will be described later is performed, the variable auxiliary electrode power supply circuit 240 can change its output voltage (trap voltage Vt) within a range of DC 0 to 150 V (Vt = 0 to 150 V).

A signal current detection circuit 230, which partially constitutes the measurement control circuit 220, has a signal input terminal 231 connected to the first output terminal 211 of the ion source power supply circuit 210, and a ground input terminal 232 connected to a ground potential PVE. This signal current detection circuit 230 is a circuit for detecting the signal current Is which will be described later.

In the circuit section 201, the ion source power supply circuit 210 and the variable auxiliary electrode power supply circuit 240 are surrounded by a first circuit casing 250, which is maintained at the first potential PV1. The first output terminal 211 of the ion source power supply circuit 210, the auxiliary first output terminal 241 of the variable auxiliary electrode power supply circuit 240, and the signal input terminal 231 of the signal current detection circuit 230 are connected to the first circuit casing 250.

Notably, in the present embodiment, the first circuit casing 250 accommodates and surrounds the ion source power supply circuit 210, the variable auxiliary electrode power supply circuit 240, and a secondary-side core 271B of an isolation transformer 270, and electrically communicates with a first conduction member 13 which will be described later.

The isolation transformer 270 has a core 271 which is divided into a primary-side core 271A, around which a primary-side coil 272 is wound, and the above-mentioned secondary-side core 271B, around which a power-supply-circuit-side coil 273 and an auxiliary-electrode-power-supply-side coil 274 are wound. The isolation transformer 270 is configured such that the primary-side core 271A and the secondary-side core 271B are spaced from each other with a small gap formed therebetween, whereby the primary-side core 271A and the secondary-side core 271B are electrically insulated from each other but common magnetic flux passes through the primary-side core 271A and the secondary-side core 271B in a magnetic circuit formed thereby. Thus, the isolation transformer 270 provides a transformer action. The primary-side core 271A is maintained at the ground potential PVE through the second circuit casing 260, and the secondary-side core 271B is maintained at the first potential PV1 (the potential of the first output terminal 211 of the ion source power supply circuit 210) through the first circuit casing 250.

The measurement control circuit 220 including the signal current detection circuit 230 is surrounded by an second circuit casing 260, which electrically communicates with the ground input terminal 232 of the signal current detection circuit 230 and is maintained at the ground potential PVE. The ground input terminal 232 of the signal current detection circuit 230 and the primary-side core 271A of the isolation transformer 270 are connected to the second circuit casing 260.

Notably, in the present embodiment, the second circuit casing 260 accommodates and surrounds the measurement control circuit 220 including the signal current detection circuit 230, and the primary-side core 271A of the isolation transformer 270. The second circuit casing 260 electrically communicates with the armoring member 14.

Further, the ion source power supply circuit 210, the variable auxiliary electrode power supply circuit 240, the first circuit casing 250, the isolation transformer 270, the measurement control circuit 220 including the signal current detection circuit 230, and the second circuit casing 260 are surrounded by the armoring member 14, which is grounded and is maintained at the ground potential PVE.

The measurement control circuit 220 includes a regulator power supply PS. This regulator power supply PS is driven by an external battery BT through a power supply wiring line BC.

The measurement control circuit 220 includes a microprocessor 100, and can communicate, through a communication line CC, with a control unit ECU which controls the internal combustion engine. Thus, the measurement control circuit 220 can transmit to the control unit ECU a signal which represents the result of measurement by the above-mentioned signal current detection circuit 230 (the magnitude of the signal current Is), a value which is converted therefrom and represents the quantity of particulates, etc., or the result of determination as to whether or not the quantity of particulates exceeds a predetermined amount. This enables the control unit ECU to control the internal combustion engine and perform other operations such as issuance of a warning which reports a failure of a filter (not shown).

A portion of the electric power externally supplied to the measurement control circuit 220 via the regulator power supply PS is distributed to the ion source power supply circuit 210 and the variable auxiliary electrode power supply circuit 240 via the isolation transformer 270. Notably, in the isolation transformer 270, the primary-side coil 272, which is a portion of the measurement control circuit 220, the power-supply-circuit-side coil 273, which is a portion of the ion source power supply circuit 210, the auxiliary-electrode-power-supply-side coil 274, which is a portion of the variable auxiliary electrode power supply circuit 240, and the core 271 (the primary-side core 271A and the secondary-side core 271B) are isolated from one another. Therefore, whereas electric power can be distributed from the measurement control circuit 220 to the ion source power supply circuit 210 and the variable auxiliary electrode power supply circuit 240, the insulation thereamong can be maintained.

Notably, in the present embodiment, the isolation transformer 270 also serves as an auxiliary electrode isolation transformer for supplying electric power to the variable auxiliary electrode power supply circuit 240.

As indicated by white arrows in FIG. 1, the pressure pump 300 takes in atmosphere (air) therearound, and feeds clean, compressed air AK toward an ion gas jetting source 11, which will be described later, through an air feed pipe 310 connected to the compressed air port 70 of the armoring member 14. A gap through which the compressed air AK flows is formed between the armoring member 14 and the circuit section 201 accommodated in the armoring member 14. The first conduction member 13, which will be described later, has air passage holes 71 through which the compressed air AK having passed through the interior of the armoring member 14 is introduced into the interior of the first conduction member 13. Further, an ion source air passage RA for leading the compressed air AK to the ion gas injection source 11 is formed inside the first conduction member 13.

Next, the detection section 10 will be described (see FIG. 1). As described above, the detection section 10 is attached to the mount portion EPT of the exhaust pipe EP of an internal combustion engine (not shown), the mount portion EPT having the mount opening EPO. From the viewpoint of the electrical functions of the detection section 10, the detection section 10 is mainly composed of an ion gas jetting source 11, a particulate electrification section 12, a first conduction member 13, a needlelike electrode member 20, and an auxiliary electrode member 50.

The needlelike electrode member 20 is connected to the second output terminal 212 of the ion source power supply circuit 210. The needlelike electrode member 20 is formed of tungsten wire, and has a needlelike distal end portion 22 having a sharp tip end. This needlelike distal end portion 22 serves as one of the two electrodes of the ion gas jetting source 11, which will be described later.

The auxiliary electrode member 50 is connected to the auxiliary second output terminal 242 of the variable auxiliary electrode power supply circuit 240. The auxiliary electrode member 50 is formed of stainless steel wire, and its distal end portion is bent into the shape of U. An auxiliary electrode portion 53, which serves as an auxiliary electrode to be described later, is provided at the distal end of the bent portion of the auxiliary electrode member 50.

Meanwhile, the first conduction member 13, which is formed of a metal and has a circular tubular shape, is connected to the first circuit casing 250. This first conduction member 13 electrically communicates with the first output terminal 211 of the ion source power supply circuit 210 through the first circuit casing 250, whereby the first conduction member 13 is maintained at the first potential PV1.

Also, the first conduction member 13 surrounds the circumferences of portions of the needlelike electrode member 20 and the auxiliary electrode member 50 which are located outside the exhaust pipe EP.

The air passage holes 71 are provided in the first conduction member 13 (at two locations in the present embodiment). The compressed air AK which has passed through the gap between the armoring member 14 and (the first casing 250 and the first conduction member 13) and is indicated by white arrows is led into the interior of the first conduction member 13 through the air passage holes 71. The compressed air AK led into the first conduction member 13 is fed, through the ion source air passage RA, to a discharge space DS (which will be described later) located on the distal end side (right side in FIG. 1) of the ion source air passage RA.

A nozzle member 31 is fitted to a distal end portion (a right end portion in FIG. 1) of the first conduction member 13. A central portion of the nozzle member 31 is tapered toward the distal end side such that it has a concave shape, and a small through hole is formed at the center. The through hole serves as a nozzle 31N.

The nozzle member 31 electrically communicates with the first conduction member 13, and is maintained at the first potential PV1.

As a result of the nozzle member 31 being fitted to the distal end of the first conduction member 13, the discharge space DS is formed inside these members. In this discharge space DS, the projecting needlelike distal end portion 22 of the needlelike electrode member 20 faces a facing surface 31T which is a surface of the nozzle member 31 on the proximal end side and which has a concave shape. Accordingly, when a high voltage is applied between the needlelike distal end portion 22 and the nozzle member 31 (facing surface 31T), gaseous discharge occurs, whereby N₂, O₂, etc. in the atmosphere are ionized, whereby positive ions (e.g., N³⁺, O²⁺; hereinafter also referred to as "ions CP") are produced. The compressed air AK indicated by the write arrows is also supplied to the discharge space DS through the ion source air passage RA. Therefore, air AR originating from the compressed air AK is jetted at high speed from the nozzle 31N of the nozzle member 31 toward a mixing region MX (which will be described later) located on the distal end side of the nozzle 31N, and the ions CP are also jetted toward the mixing region MX together with the compressed air AK (air AR).

The particulate electrification section 12 is formed on the distal end side of the nozzle member 31. An intake port 331 and an exhaust port 430 (which are open toward the downstream side of the exhaust pipe EP) are formed in the side wall of the particulate electrification section 12. This particulate electrification section 12 communicates with the nozzle member 31 electrically as well. Therefore, the particulate electrification section 12 is maintained at the first potential PV1 (collection electrode potential).

The inner space of the particulate electrification section 12 is narrowed by a collection electrode 42 which bulges inward, whereby a slit-shaped internal space is formed. As a result, on the proximal end side of the collection electrode 42, a circular columnar space is formed between the nozzle member 31 and the collection electrode 42.

Of the space inside the particulate electrification section 12, the above-mentioned circular columnar space will be referred to as a "circular columnar mixing region MX1." Also, the slit-shaped internal space formed by the collection electrode 42 will be referred to as a "slit-shaped mixing region MX2." The circular columnar mixing region MX1 and the slit-shaped mixing region MX2 will be collectively referred to as a "mixing region MX." A circular columnar space is also formed on the distal end side of the collection electrode 42, and serves as an exhaust passage EX which communicates with the exhaust port 430. In addition, on the proximal end side of the collection electrode 42, there is formed an introduction passage HK which extends from the intake port 331 to the mixing region MX (the circular columnar mixing region MX1).

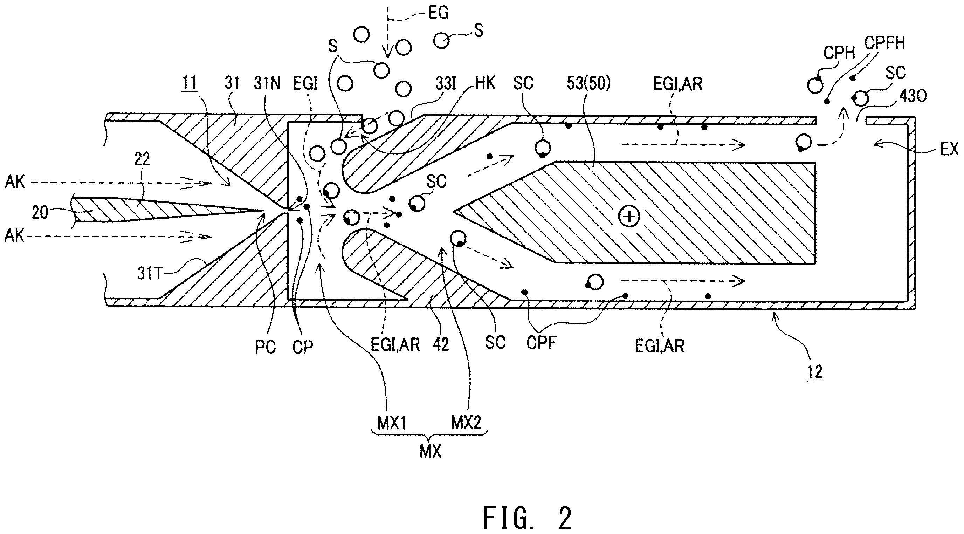

Next, the electrical functions and operations of various sections of the particulate detection system 1 of the present embodiment will be described with reference to FIG. 2 in addition to FIG. 1. FIG. 2 schematically shows the electrical function and operation of the detection section 10 of the present system 1 in order to facilitate the understanding of the electrical function and operation.

The needlelike electrode member 20 is connected, for electrical communication, with the second output terminal 212 of the ion source power supply circuit 210. Accordingly, the needlelike electrode member 20 is maintained at the second potential PV2, which is a positive pulse voltage (1 to 2 kV0-p), which is obtained through half-wave rectification of a sinusoidal wave of 100 kHz, in relation to the first potential PV1 as described above.

Also, the auxiliary electrode member 50 is connected, for electrical communication, with the auxiliary second output terminal 242 of the variable auxiliary electrode power supply circuit 240. Thus, the auxiliary electrode member 50 is maintained at the auxiliary electrode potential PV3.

Further, the first conduction member 13, the nozzle member 31, and the particulate electrification section 12 are connected, for electrical communication, with the first output terminal 211 of the ion source power supply circuit 210, the auxiliary first output terminal 241 of the variable auxiliary electrode power supply circuit 240, the first circuit casing 250 surrounding these circuits, and the signal input terminal 231 of the signal current detection circuit 230. These are maintained at the first potential PV1.

In addition, the armoring member 14 is connected, for electrical communication, with the ground input terminal 232 of the signal current detection circuit 230 and the second circuit casing 260 surrounding the measurement control circuit 220 including the signal current detection circuit 230. These are maintained at the ground potential PVE, which is the same as the potential of the exhaust pipe EP.

Accordingly, as described above, gaseous discharge (specifically, corona discharge) occurs between the nozzle member 31 (the facing surface 31T) maintained at the first potential PV1 and the needlelike distal end portion 22 maintained at the second potential PV2, which is a positive high potential in relation to the first potential PV1. More specifically, positive needle corona PC is produced; i.e., corona is generated around the needlelike distal end portion 22, which serves as a positive electrode. As a result, N₂, O₂, etc. in the atmospheric air (air) therearound are ionized, whereby positive ions CP are produced. Some produced ions CP pass through the nozzle 31N and are jetted toward the mixing region MX, together with the air AR originating from the compressed air AK supplied to the discharge space DS.

In the present embodiment, the needlelike distal end portion 22 and the nozzle member 31 correspond to the two electrodes which generate gaseous discharge (corona discharge). Also, the nozzle member 31 and the needlelike distal end portion 22 surrounding the discharge space DS constitute the ion gas jetting source 11.

When the air AR is jetted to the mixing region MX (the circular columnar mixing region MX1) through the nozzle 31N, the air pressure in the circular columnar mixing region MX1 drops. Therefore, the exhaust gas EG is taken into the mixing region MX (the circular columnar mixing region MX1, the slit-shaped mixing region MX2) from the intake port 331 through the introduction passage HK. The introduced exhaust gas EGI is mixed with the air AR, and is discharged or exhausted together with the air AR from the exhaust port 430 through the exhaust passage EX.

At that time, if particulates S such as soot are contained in the exhaust gas EG, as shown in FIG. 2, the particulates S are also introduced into the mixing region MX. Incidentally, the jetted air AR includes ions CP. Therefore, the ions CP adhere to the introduced particulates S such as soot, and the particulates S become positively electrified particulates SC. The positively electrified particulates SC are exhausted, together with the air AR, from the exhaust port 430 through the mixing region MX and the exhaust passage EX.

Meanwhile, of the ions CP jetted to the mixing region MX, floating ions CPF not having adhered to the particulates S adhere to (are captured by) portions of the particulate electrification section 12, which is maintained at the first potential PV1 (collection electrode potential) and which forms the collection electrode 42.

Since the system 1 of the present embodiment is configured as described above, as shown in FIG. 1, when gaseous discharge occurs at the ion gas jetting source 11, a discharge current Id is supplied to the needlelike distal end portion 22 from the second output terminal 212 of the ion source power supply circuit210. The greater part of the discharge current Id flows to the nozzle member 31 (received current Ij). This received current Ij flows through the first conduction member 13, and flows into first output terminal 211 of the ion source power supply circuit 210.

The greater part of the ions CP produced at the ion gas jetting source 11 and jetted therefrom are collected by the collection electrode 42. A collected current Ih originating from the charge carried by the floating ions CPF collected by the collection electrode 42 also flows into the first output terminal 211 through the first conduction member 13, which electrically communicates with the collection electrode 42 (the particulate electrification section 12). Namely, a received/collected current Ijh (= Ij+Ih) which is the sum of these currents flows through the first conduction member 13.

This received/collected current Ijh becomes slightly small in magnitude than the discharge current Id. This is because some of the ions CP produced at the ion gas jetting source 11 adhere to the electrified particulates SC exhausted from the exhaust port 430, whereby some of the ions CP are exhausted from the exhaust port 430 (the exhausted ions will be referred to as the "exhausted ions CPH"). The received/collected current Ijh does not include a current component corresponding to the charge of the exhausted ions CPH. Notably, the exhaust pipe EP through which the electrified particulates SC flow is maintained at the ground potential PVE.

Incidentally, when viewed from the ion source power supply circuit 210, an imbalance occurs between the discharge current Id flowing out from the second output terminal 212 and the received/collected current Ijh flowing into the first output terminal 211. Therefore, a signal current Is corresponding to the shortage (the difference = discharge current - the received/collected current) flows from the ground potential PVE to the first output terminal 211, whereby a balanced state is created.

In view of this, in the present system 1, the signal current detection circuit 230-which has the signal input terminal 231 communicating with the first output terminal 211 and the ground input terminal 232 communicating with the ground potential PVE and which detects the current flowing between the signal input terminal 231 and the ground input terminal 232-is provided so as to detect the signal current Is which flows from the ground potential PVE to the signal current detection circuit 230 of the measurement control circuit 220 through the armoring member 14 and the second circuit casing 260, flows through the signal current detection circuit 230, and then flows to the first output terminal 211 through the first circuit casing 250.

The magnitude of the signal current Is corresponding to the difference (the discharge current Id - the received/collected current Ijh) increases and decreases in accordance with the quantity of charge of the exhausted ions CPH (ions adhering to the discharged, electrified particulates SC); accordingly, the quantity of particulates S in the introduced exhaust gas EGI; i.e., the quantity of particulates S contained in the exhaust gas EG flowing through the exhaust pipe EP. Therefore, the quantity of particulates S contained in the exhaust gas EG can be detected through detection of the magnitude of the signal current Is.

Incidentally, if the floating ions CPF, which are those among the ions CP injected to the mixing region MX and which have not adhered to the particulate S, are exhausted from the exhaust port 430 without being collected by the collection electrode 42 (the particulate electrification section 12), the signal current Is contains a component which does not depend on the quantity of the particulate S. Therefore, the accuracy in detecting the quantity of the particulate S decreases.

In contrast, in the system 1 of the present embodiment, the auxiliary electrode portion 53 (the auxiliary electrode) maintained at the auxiliary electrode potential PV3 is disposed in the slit-shaped mixing region MX2 of the particulate electrification section 12. Notably, as described above, in the state of ordinary particulate detection, the auxiliary electrode potential PV3 is a predetermined positive DC potential in relation to the first potential PV1, which is the collection electrode potential of the collection electrode 42. Namely, at the time of ordinary particulate detection, the trap voltage Vt, which is the potential difference between the auxiliary electrode potential PV3 and the collection electrode potential (the first potential) PV1, is set to an ordinary trap voltage Vt0 (e.g., Vt0 = 150 Vdc). This ordinary trap voltage Vt0 is sufficiently higher than a lowest prevention voltage VtC which will be described later.

Therefore, the positively electrified light floating ions CPF receive a large repulsive force from the auxiliary electrode portion 53, and are accelerated toward the collection electrode 42. Therefore, the floating ions CPF are collected by the collection electrode 42 without fail. Namely, a trap voltage at which the floating ions CPF are not exhausted from the exhaust port 430 in the ordinary particulate detection state is set as the ordinary trap voltage Vt0.

Notably, although the electrified particulates SC, which are quite heavy as compared with the floating ions CPF, also receive a repulsive force from the auxiliary electrode portion 53, they are exhausted from the exhaust port 430 as they are because of the flow of the air AR.

Namely, the signal current Is changes in accordance with the quantities of the electrified particulates SC (exhausted ions CPH adhering thereto) and exhausted floating ions CPFH, which are exhausted from the exhaust port 430. However, when the trap voltage Vt which is applied between the auxiliary electrode portion 53 and the collection electrode 42 is set to a value equal to or higher than the lowest prevention voltage VtC which will be described later, all the floating ions CPF within the mixing region MX are collected by the collection electrode 42, and are not exhausted from the exhaust port 430 (the quantity of the exhausted floating ions CPFH becomes zero). In this case, since the signal current Is changes depending, only on the quantity of the electrified particulate SC exhausted from the exhaust port 430, the quantity of the particulate S can be detected accurately.

In contrast, when the trap voltage Vt applied between the auxiliary electrode portion 53 and the collection electrode 42 is made smaller than the lowest prevention voltage VtC, which will be described later, some of the floating ions CPF are exhausted from the exhaust port 430 without being collected by the collection electrode 42 (the exhausted floating ions CPFH are produced). In this case, the lower the value to which the trap voltage Vt is set, the greater the quantity of the floating ions CPF exhausted from the exhaust port 430 (the quantity of the exhausted floating ions CPFH increases).

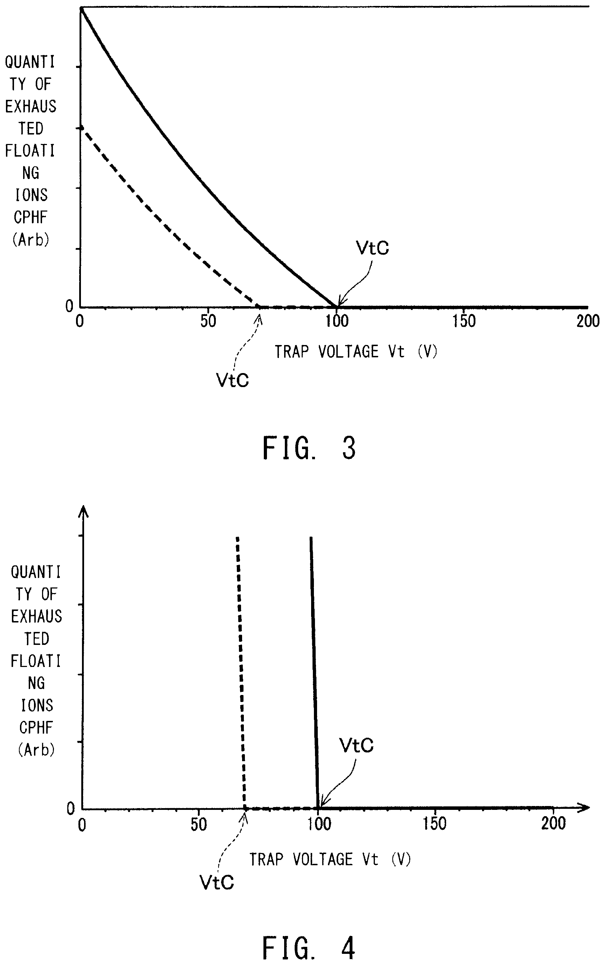

In view of the above, the characteristic of the detection section 10 of the present embodiment in terms of the relation between the trap voltage Vt and the quantity of the exhausted floating ions CPFH will be described. The trap voltage Vt between the auxiliary electrode portion 53 and the collection electrode 42 is changed under a condition that no particulate S flows through the exhaust pipe EP (i.e., no particulate S flows into the mixing region MX) and therefore the quantity of the exhausted particulates SC is zero, the quantity of the ions CP injected from the nozzle 31N toward the mixing region MX is constant, and the flow rate of the jetted compressed air AK (air AR) is constant. When the relation between the trap voltage Vt and the quantity of the exhausted floating ions CPFH is investigated, the characteristic (the relation between the trap voltage Vt and the quantity of the exhausted floating ions CPFH) shown by a continuous line in the graph of FIG. 3 is obtained.

Namely, when the trap voltage Vt becomes equal to or higher than a predetermined value (Vt = 100 V in FIG. 3), the quantity of the exhausted floating ions CPFH becomes approximately zero. Meanwhile, when the trap voltage Vt is lower than the predetermined value (Vt = 100 V), the quantity of the exhausted floating ions CPFH increases approximately linearly as the trap voltage Vt decreases.

Here, the lowest trap voltage Vt which can prevent production of the exhausted floating ions CPFH which are those among the floating ions CPF exhausted from the exhaust port 430 without being collected by the collection electrode 42) will be referred to as the "lowest prevention voltage VtC" (VtC = 100 V in the present example).

The results of FIG. 3 reveal that, in the detection section 10, as described above, the quantity of the exhausted floating ions CPFH can be made approximately zero in a range in which the trap voltage Vt is equal to or higher than the lowest prevention voltage VtC. Meanwhile, in a range in which the trap voltage Vt is lower than the lowest prevention voltage VtC, the detection section 10 exhibits an "exhausted floating ion quantity - trap voltage characteristic" in which the quantity of the exhausted floating ions CPFH increases as the trap voltage Vt decreases."

Notably, FIG. 4 is a graph showing, on an enlarged scale, a range of the graph of FIG. 3 showing the relation between the quantity of the exhausted floating ions and the trap voltage Vt, in which range the quantity of exhausted floating ions is very small.

The continuous line in the graph of FIG. 4 shows that the quantity of the exhausted floating ions CPFH increases sharply as a result of a slight decrease in the trap voltage Vt in a range in which the trap voltage Vt is lower than the lowest prevention voltage VtC (VtC = 100 V in FIGS. 3 and 4).

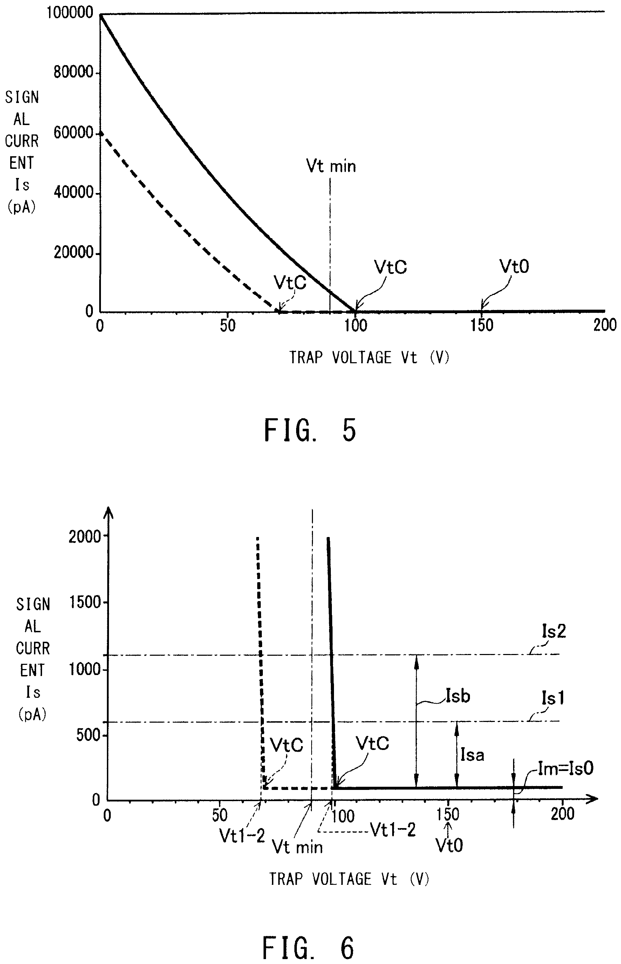

FIG. 5 shows the relation between the signal current Is detected by the signal current detection circuit 230 and the trap voltage Vt. Since the detection section 10 is under the above-described condition (the number of the exhausted particulates SC is zero), theoretically, the magnitude of the signal current Is is proportional to the quantity of the exhausted floating ions CPFH. Accordingly, the graph shown in FIG. 5 has a shape approximately the same as that of the graph of FIG. 3.

Namely, the results of FIG. 5 reveal that the signal current Is can be made approximately zero in the range in which the trap voltage Vt is equal to or higher than the lowest prevention voltage VtC.

Meanwhile, in the range in which the trap voltage Vt is lower than the lowest prevention voltage VtC, the detection section 10 exhibits a "signal current - trap voltage characteristic" in which the signal current Is increases as the lower the trap voltage Vt decreases.

Notably, FIG. 6 is a graph showing, on an enlarged scale, a range of the graph of FIG. 5 showing the relation between the signal current Is and the trap voltage Vt, in which range the quantity of exhausted floating ions is very small.

The continuous line in the graph of FIG. 6 shows that the signal current Is increases sharply as a result of a slight decrease in the trap voltage Vt in a range in which the trap voltage Vt is equal to or lower than the lowest prevention voltage VtC (VtC = 100 V in FIGS. 5 and 6). Namely, it is found that, whereas the magnitude of the signal current Is obtained when the exhaust gas EG contains the particulates S is usually about several hundreds pA, in the range in which the trap voltage Vt is lower than the lowest prevention voltage VtC, a variation of several hundreds pA is produced as a result of the trap voltage Vt being changed only about 1 to 2 V.

Meanwhile, it is understood from FIG. 6 that the signal current Is flows slightly even in a region in which the trap voltage Vt is equal to or higher than the lowest prevention voltage VtC. However, this slight flow of the signal current Is is not attributable to the exhausted floating ions CPFH. Since a potential difference is present between the first potential PV1 and the ground potential PVE, leak current Im flows between the members maintained at the first potential PV1 and the members maintained at the ground potential PVE at various locations such as the detection section 10. Such leak current Im is detected by the signal current detection circuit 230 as the signal current Is.

Here, there is considered a case where the flow rate of the jetted compressed air AK has decreased as a result of, for example, the nozzle 31N being clogged by soot or a foreign substance. In the system 1 in which the detection section 10 is attached to the exhaust pipe EP as in the present embodiment, the detection section 10 (the nozzle 31N) is exposed to the exhaust gas EG for a long period of time. Therefore, soot or a foreign substance may clog the nozzle 31N.

In the case where the nozzle 31N has been clogged and the flow rate of the jetted compressed air AK has decreased, the quantity of the ions CP jetted together with the compressed air AK also decreases. Further, the speed (flow speed) of the jetted compressed air AK also decreases. As a result, the quantity of the ions CP (floating ions CPF) jetted into the mixing region MX decreases, and the degree of mixing between the floating ions CPF and the particulates S in the mixing region MX becomes insufficient. Therefore, adhesion of the floating ions CPF to the particulates S is not promoted. Because of these reasons, even when the quantity of particulates S (e.g., soot) contained in the exhaust gas EG is the same, the quantity of the exhausted ions CPH adhering to the electrified particulates SC and exhausted from the exhaust port 430 decreases. As a result, the obtained value of the signal current Is decreases, and the quantity of the particulates S contained in the exhaust gas EG appears to be smaller than the actual quantity.

Further, in an extreme case where the nozzle 31N is completely clogged, the quantity of the particulates S contained in the exhaust gas EG cannot be detected.

In the above-described case where the flow rate of the compressed air AK has decreased as a result of, for example, clogging of the nozzle 31N, the quantity of the exhausted floating ions CPFH and the trap voltage Vt have a relation indicated by broken lines in FIGS. 3 and 4. Namely, as compared with the ordinary (normal) case indicated by continuous lines, the lowest prevention voltage VtC decreases, and even at a relatively low trap voltage Vt, all the floating ions CPF can be collected, and the generation of the exhausted floating ions CPFH can be prevented. Also, in the case where the trap voltage Vt is set to a value lower than the lowest prevention voltage VtC, the quantity of the exhausted floating ions CPFH measured when the nozzle 31N is clogged is smaller than that measured when the nozzle 31N is not clogged.

Namely, the detection section 10 exhibits a characteristic in which the smaller the flow rate of the compressed air AK jetted from the nozzle 31N, the lower the lowest prevention voltage VtC, and the greater the shift of the range in which the detection section 10 exhibits the exhausted floating ion quantity - trap voltage characteristic toward the side where the trap voltage Vt is low.

Also, the signal current Is and the trap voltage Vt have a relation indicated by broken lines in FIGS. 5 and 6. Namely, as compared with the ordinary (normal) case (indicated by continuous lines), the lowest prevention voltage VtC decreases, and the signal current Is can be reduced to the leak current Im even at a relatively low trap voltage Vt. Also, in the case where the trap voltage Vt is set to a value lower than the lowest prevention voltage VtC, the signal current Is measured when the nozzle 31N is clogged is smaller than that measured when the nozzle 31N is not clogged.

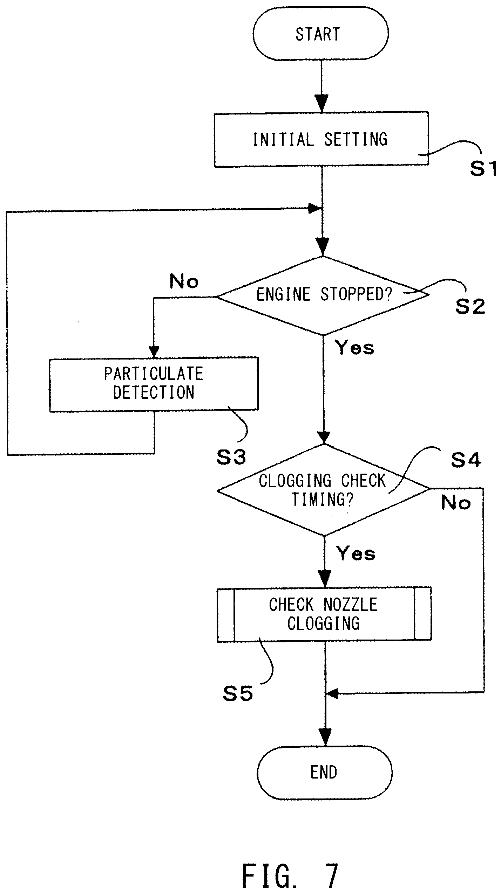

The system 1 of the present embodiment detects the clogging of the nozzle 31N as follows by utilizing the above-described characteristic of the detection section 10. First, the detection of particulates by the present system 1 will be described with reference to the flowchart of FIG. 7.

When a key switch of the engine (not shown) is turned on, the particulate detection system 1 (the microprocessor 100 of the measurement control circuit 220) is started. In step S1, the microprocessor 100 performs necessary initial setting. After that, in step S2, the microprocessor 100 determines whether or not the engine is stopped.

When the engine is operated (No), the microprocessor 100 proceeds to step S3 and detects the quantity of the particulates S contained in the exhaust gas EG as usual. Specifically, the various circuits (the signal current detection circuit 230, the ion source power supply circuit 210, and the variable auxiliary electrode power supply circuit 240) and the pressure pump 300 are operated. As a result, the ions CP are produced in the ion gas jetting source 11 as a result of gaseous discharge, and are jetted into the mixing region MX together with the compressed air AK (air AR). Meanwhile, microprocessor 100 detects the signal current Is by using the signal current detection circuit 230, detects the quantity of the particulates S contained in the exhaust gas EG from the detected signal current Is, and sends the detected quantity of the particulates S to the control unit ECU.

Subsequently, the microprocessor 100 returns to step S2, and repeats steps S2 and S3.

After that, when the operation of the vehicle ends and the engine is stopped, the microprocessor 100 makes a "Yes" determination in step S2 and proceeds to step S4.

In this step S4, the microprocessor 100 determines whether or not the timing of checking the clogging of the nozzle 31N has come. For example, the microprocessor 100 determines whether or not one month has elapsed after the previous check timing. In the case where the microprocessor 100 makes a "No" determination in step S4; i.e., in the case where the check timing has not yet come, the microprocessor 100 ends the present routine. Meanwhile, in the case where the check timing has come (Yes), the microprocessor 100 proceeds to step S5, and executes a nozzle clogging checking subroutine. After that, the microprocessor 100 ends the present routine.

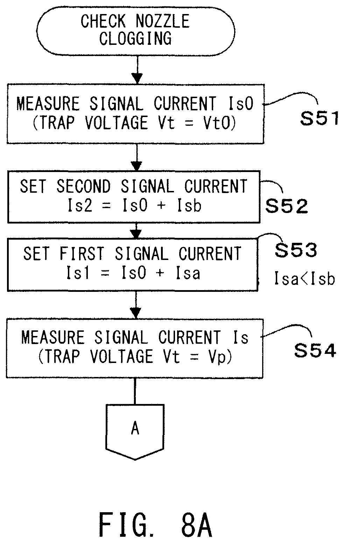

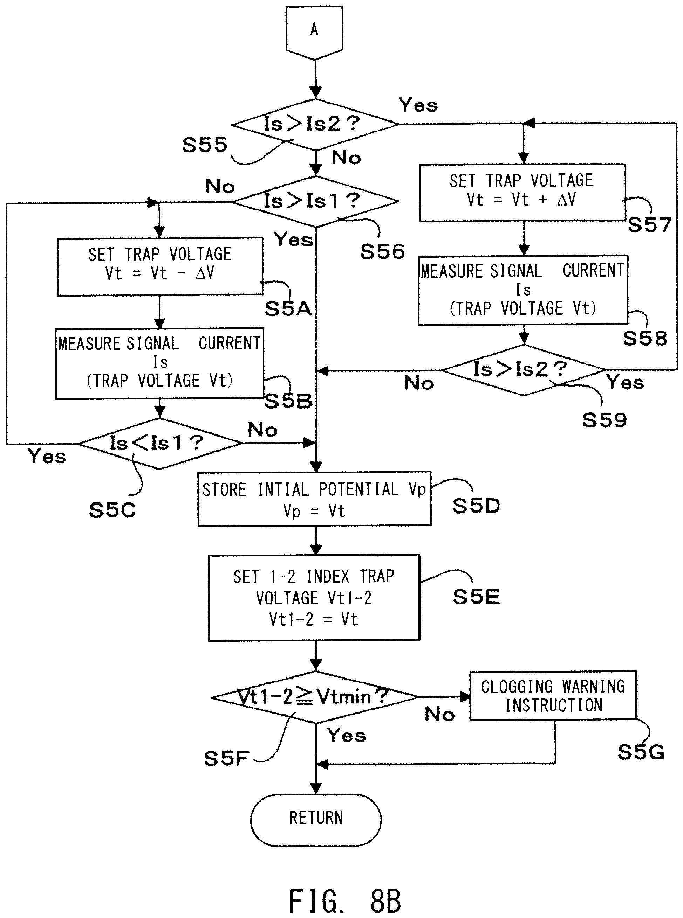

Next, the nozzle clogging checking subroutine will be described with reference to the flowchart of FIGS. 8A and 8B.

Notably, in a stage where the nozzle clogging checking subroutine S5 is executed, the engine is in the stopped state, and the exhaust gas EG does not flow through the exhaust pipe EP (although the exhaust gas EG exists, it does not flow). Therefore, the particulates S (e.g., soot) do not flow into the mixing region MX.

First, in step S51, the microprocessor 100 measures a base current Is0 while setting the trap voltage Vt to the ordinary trap voltage Vt0 (e.g., Vt0 = 150 V). Notably, this ordinary trap voltage Vt0 is sufficiently higher than the lowest prevention voltage VtC. Accordingly, the magnitude of the base current Is0 corresponds to the above-described leak current Im. Notably, in the present embodiment, the base current Is0 (=Im) is about 80 pA.

Next, the microprocessor 100 proceeds to step S52, and sets a second threshold value Is2. Specifically, the microprocessor 100 calculates the second threshold value Is2 in accordance with an expression Is2 = Is0+Isb. In the expression, Isb represents a second shift value which determines the current shift from the base current Is0 to the second threshold value Is2.

Further, the microprocessor 100 proceeds to step S53, and sets a first threshold value Is1. Specifically, the microprocessor 100 calculates the first threshold value Is1 in accordance with an expression Is1 = Is0+Isa. In the expression, Isa represents a first shift value which determines the current shift from the base current Is0 to the first threshold value Is1.

Notably, the first and second shift values satisfy a relational expression Isa < Isb. Also, in the present embodiment, Isa is set to 500 pA and Isb is set to 1000 pA. Therefore, for example, Is1 = 580 pA and Is2 = 1080 pA.

Further, the microprocessor 100 proceeds to step S54. In step S54, the microprocessor 100 sets the trap voltage Vt to a check-time initial voltage Vp (e.g., Vp = 80 V) by changing the output voltage of the variable auxiliary electrode power supply circuit 240, and measures the signal current Is in this state. Next, the microprocessor 100 proceeds to step S55, and determines whether or not the obtained signal current Is is greater than the second threshold value Is2. In the case where the microprocessor 100 makes a "Yes" determination; i.e., Is > Is2, the microprocessor 100 proceeds to step S57.

In step S57, the microprocessor 100 sets the trap voltage Vt. Specifically, the microprocessor 100 increases the current trap voltage Vt by a change amount ΔV.

Notably, it is preferred that this change amount ΔV be set to a value smaller than the difference between a trap voltage at which the signal current Is becomes the first threshold value Is1 (in the present embodiment, Is1 = 580 pA) and a trap voltage at which the signal current Is becomes the second threshold value Is2 (in the present embodiment, Is2 = 1080 pA) in the graph of FIG. 6. For example, it is preferred that the change amount ΔV be set to a value smaller than a trap voltage difference (about 3 V in the graph of FIG. 6) corresponding to a current difference of 500 pA in the graph of FIG. 6. More preferably, the change amount ΔV is set to a value obtained by dividing the above-described difference by a value of 3 to 10 (for example, ΔV is about 0.5 V (3 V/6).

Next, in step S58, the microprocessor 100 measures the signal current Is again.

Further, in step S59, the microprocessor 100 determines whether or not the obtained signal current Is is greater than the second threshold value Is2. In the case where the microprocessor 100 makes a "Yes" determination in S59; i.e., Is is still larger than Is2 (Is > Is2), the microprocessor 100 returns to step S57, and repeats steps S57, S58, and S59.

Meanwhile, in the case where the microprocessor 100 makes a "No" determination in S59; i.e., Is is equal to or smaller than Is2 (Is ≤ Is2), the microprocessor 100 proceeds step S5D.

Meanwhile, in the case where the microprocessor 100 makes a "No" determination in S55; i.e., Is is equal to or smaller than Is2 (Is ≤ Is2), the microprocessor 100 proceeds step S56.

In step S56, the microprocessor 100 determines whether or not the obtained signal current Is is greater than the first threshold value Is1. In the case where the microprocessor 100 makes a "No" determination in S56; i.e., Is is equal to or smaller than Is1 (Is ≤ Is1), the microprocessor 100 proceeds step S5A.

In step S5A, the microprocessor 100 sets the trap voltage Vt. Specifically, the microprocessor 100 decreases the current trap voltage Vt by the change amount ΔV.

Next, in step S5B, the microprocessor 100 measures the signal current Is again.

Further, in step S5C, the microprocessor 100 determines whether or not the obtained signal current Is is smaller than the first threshold value Is1. In the case where the microprocessor 100 makes a "Yes" determination in S5C; i.e., Is is still smaller than Is1 (Is < Is1), the microprocessor 100 returns to step S5A, and repeats steps S5A, S5B, and S5C.

Meanwhile, in the case where the microprocessor 100 makes a "No" determination in S5C; i.e., Is is equal to or greater than Is1 (Is ≥ Is1), the microprocessor 100 proceeds step S5D.

Also, in the case where the microprocessor 100 makes a "Yes" determination in S56 (1s1 < Is ≤ Is2); namely, in the case where the signal current Is becomes an intermediate value between the first threshold value Is1 and the second threshold value Is2, the microprocessor 100 proceeds step S5D. In step S5D, the microprocessor 100 stores the current trap voltage Vt as the check-time initial voltage Vp (Vp = Vt). This operation is performed so as to provide a proper check-time initial voltage Vp in step S54 at the time of next checking.

Next, in step S5E, the microprocessor 100 sets (stores) the current trap voltage Vt as a 1-2 index trap voltage Vt1-2 (Vt1-2 = Vt).

Further, in step S5F, the microprocessor 100 determines whether or not the 1-2 index trap voltage Vt1-2 is equal to or higher than a permissible voltage Vtmin. Notably, this permissible voltage Vtmin is the lowest voltage for the 1-2 index trap voltage Vt1-2. For example, the permissible voltage Vtmin is set to a value which allows proper determination as to whether the nozzle 31N is clogged, in consideration of an allowable range of the decrease in the flow rate of the compressed air AK caused by clogging of the nozzle 31N, and the magnitude of noise contained in the signal current Is. In the present embodiment, the permissible voltage Vtmin is set to 90 V as indicated by an alternate long and short dash line in FIG. 6.

In the case where the microprocessor 100 makes a "Yes" determination in step S5F; i.e., the 1-2 index trap voltage Vt1-2 is equal to or higher than the permissible voltage Vtmin (Vtl-2 ≥ Vtmin), the microprocessor 100 returns to the main routine, and stops the drive of the system 1. This is because, the 1-2 index trap voltage Vt1-2 is equal to or higher than the permissible voltage Vtmin, and therefore, it can be determined that a failure attributable to clogging of the nozzle 31N has not occurred (permissible).

Meanwhile, in the case where the microprocessor 100 makes a "No" determination in step S5F; i.e., the 1-2 index trap voltage Vtl-2 is lower than the permissible voltage Vtmin, the microprocessor 100 proceeds to step S5G, and sends to the control unit ECU a signal for requesting the control unit ECU to display a warning which indicates that clogging has occurred. This is because the flow rate of the compressed air AK has decreased due to, for example, clogging of the nozzle 31N, and there is a possibility that the quantity of the particulates S cannot be detected properly.

Notably, in the present embodiment, the microprocessor 100 of the measurement control circuit 220 which executes step S5F corresponds to the determination means. Also, the microprocessor 100 which executes steps S54 to S5C corresponds to the index detection means.

Also, the 1-2 index trap voltage Vt1-2 corresponds to the index trap voltage which is a trap voltage corresponding to a predetermined quantity of exhausted floating ions.

The present system 1 includes steps S54 to S5C (see FIGS. 8A, 8B: the index detection means) for obtaining the 1-2 index trap voltage Vt1-2 which is an index trap voltage, and step S5F (see FIGS. 8A, 8B: the determination means) for determining whether or not the 1-2 index trap voltage Vt1-2 is higher than the permissible voltage Vtmin.

By virtue of this configuration, the present system 1 can properly detect the quantity of the particulates S contained in the exhaust gas EG. In addition, when, along with a decrease in the amount of the compressed air AK, the jetting amount of the ions CP decreases due to, for example, clogging of the nozzle 31N, the present system 1 can properly detect the decrease in the jetting amount of the ions CP.

In the case where the quantity of the particulates S contained in the exhaust gas EG is detected with the trap voltage Vt set to a voltage higher than the lowest prevention voltage VtC, the magnitude of the signal current Is usually obtained due to presence of the particulates S is not so large (e.g., about several hundreds pA) in many cases. In contrast, in a range within which the trap voltage Vt is lower than the lowest prevention voltage VtC, the quantity of exhausted floating ions CPFH; i.e., the magnitude of the signal current Is corresponding thereto changes greatly as a result of a slight change (e.g., a change of about 1 to 2 V) in the trap voltage Vt. Therefore, in some cases, due to influence of noise, etc., it is difficult to accurately obtain the trap voltage Vt at the time when the quantity of the exhausted floating ions CPFH reaches a predetermined quantity; i.e., when the magnitude of the signal current Is becomes a predetermined value (e.g., 750 pA). Meanwhile, the determination as to whether or not the flow rate of the compressed air AK has decreased can be made without accurately obtaining such a value of the trap voltage.

The present system 1 has the signal current detection circuit 210 for detecting the signal current Is. In steps S54 to S5C, the microprocessor 100 which serves as the index detection means changes the trap voltage Vt, and obtains the 1-2 index trap voltage Vtl-2 by using the signal current Is detected by the signal current detection circuit 210. Also, in step S5F, the microprocessor 100 which serves as the determination means determines whether or not the obtained 1-2 index trap voltage Vt1-2 is higher than the permissible voltage Vtmin.

As described above, the index trap voltage can be simply obtained by detecting the signal current Is and obtaining the 1-2 index trap voltage Vt1-2 at which the signal current Is falls within a range from the first threshold value Is1 to the second threshold value Is2. Also, by virtue of this, the microprocessor 100 which serves as the determination means can easily determine in step S5F whether or not the obtained 1-2 index trap voltage Vt1-2 is higher than the permissible voltage Vtmin.

The exhaust gas EG often contains soot (particulates S). Also, when the detection section 10 of the system 1 is attached to the exhaust pipe EP, the detection section 10 is exposed to the exhaust gas EG for a long period of time. Therefore, clogging of the nozzle 31N may occur. Such clogging of the nozzle 31N cannot be detected by means of visual checking or the like unless the detection section 10 is detached from the exhaust pipe EP.

In the present system 1, a variation (decrease) of the index trap voltage Vtl-2 caused by, for example, clogging of the nozzle 31N is detected in step S5F by the microprocessor 100 which serves as the determination means. Therefore, clogging of the nozzle 31N can be readily detected.

In the above-described embodiment, the present system 1 is applied to exhaust gas EG flowing through an exhaust pipe EP of an engine. However, the present system 1 can be applied to detection of particulates contained in various types of gases, for example, detection of particulates contained in exhaust gas flowing through an exhaust flue (chimney or the like) of a combustion furnace and detection of the presence/absence or quantity of particulates in the atmosphere.

In the embodiment, the index detection means is the microprocessor 100 of the measurement control circuit 220 which executes steps S54 to S5C, and the determination means is the microprocessor 100 which executes step S5F.

However, separately from the microprocessor 100, another microprocessor may be provided in the measurement control circuit 220 so as to execute the processing of steps S54 to S5C or the processing of step S5F, to thereby serve as the index detection means or the determination means. Alternatively, separately from the measurement control circuit 220, another circuit, another microprocessor, etc. may be provided in the second circuit casing 260 such that the second microprocessor executes the processing of steps S54 to S5C or the processing of step S5F, to thereby serve as the index detection means or the determination means. Alternatively, the microprocessor provided in the control unit ECU may be caused to execute the processing of steps S54 to S5C or the processing of step S5F. In this case, the control unit ECU serves as the index detection means or the determination means.

### DESCRIPTION OF SYMBOLS

EP: exhaust pipe
EG: exhaust gas
EGI: introduced exhaust gas
S: particulate
SC: electrified particulate
CP: ion
CPF: floating ion
CPH: exhausted ion
CPFH: exhausted floating ion
Is: signal current
Is0: base current
Is1: first threshold value
Is2: second threshold value
1: particulate detection system
10: detection section
11: ion gas jetting source
12: particulate electrification section
20: needlelike electrode member
22: needle-shaped forward end portion (of the needle electrode member) (ion gas jetting source)
31: nozzle member (ion gas jetting source, particulate electrification section)
31N: nozzle
331: intake port
PV1: first potential (collection electrode potential)
PV2: second potential
PV3: auxiliary electrode potential
PVE: ground potential
Vt: trap voltage
VtC: lowest prevention voltage
Vt0: ordinary trap voltage
Vp: check-time initial value
ΔV: change amount
Vt1-2: 1-2 index trap voltage (index trap voltage)
Vtmin: permissible voltage
MX: mixing region
42: collection electrode
43O: exhaust port
50: auxiliary electrode member
53: auxiliary electrode portion (of the auxiliary electrode member) (auxiliary electrode)
70: compressed air port
AK: compressed air (gas)
300: pressure pump
S5F: range determination means
S54 to S5C: index detection means
100: microprocessor
201: circuit section
210: ion source power supply circuit
220: measurement control circuit
230: signal current detection circuit
240: variable auxiliary electrode power supply circuit

## Claims

1. A particulate detection system (1) for detecting a quantity of particulates (S) contained in a gas (EG), comprising:
a detection section (10) which comes into contact with the gas (EG);
circuits (210, 240, 230) for driving the detection section (10) and detecting the quantity of the particulates (S); and
a compressed air port (70) into which compressed air (AK) flows;
wherein the detection section (10) includes:
an ion gas jetting source (11) which produces ions (CP) through gaseous discharge and which has a nozzle member (31) forming a nozzle (31N) for jetting the produced ions (CP) together with the compressed air (AK) having flowed through the compressed air port (70);
a particulate electrification section (12) which has an intake port (33I) for introducing the gas (EG) into the particulate electrification section (12), which defines a mixing region (MX) where the gas (EGI) introduced through the intake port (33I) is mixed with the ions (CP) jetted from the ion gas jetting source (11), whereby the ions (CP) adhere to the particulates (S) in the introduced gas (EGI) and electrified particulates (SC) are produced,
the particulate electrification section (12) having
an exhaust port (430) for exhausting the electrified particulates (SC) together with the introduced gas (EGI), and
forms a collection electrode (42) which is maintained at a collection electrode potential (PV1) and which collects floating ions (CPF) which are ions (CP) not having adhered to the particulates (S); and
an auxiliary electrode (53) which is disposed in the particulate electrification section (12), which is connected to a variable auxiliary electrode power supply circuit (240) which is one of the circuits (210, 240, 230) and is maintained at an auxiliary electrode potential (PV3), and which exerts a repulsive force on the floating ions (CPF) to thereby assist the collection electrode (42) in collecting the floating ions (CPF), wherein
the auxiliary electrode potential (PV3) is a variable potential which varies in relation to the collection electrode potential (PV1), and is produced by the variable auxiliary electrode power supply circuit (240);
wherein the detection section (10) is configured to
prevent production of exhausted floating ions (CPFH) which are floating ions (CPF) exhausted from the exhaust port (43O) without being collected by the collection electrode (42),
in a state that the particulates (S) do not flow into the mixing region (MX) and a flow rate of the compressed air (AK) and the quantity of the ions (CP) which are jetted from the nozzle (31N) toward the mixing region (MX) are constant,
when in said state a trap voltage (Vt) which is a potential difference between the auxiliary electrode potential (PV3) and the collection electrode potential (PV1) is set to a voltage equal to or higher than a lowest prevention voltage (VtC);
and wherein the detection section (10) is configured that when in said state the trap voltage (Vt) is set to a voltage lower than the lowest prevention voltage (VtC), the quantity of the exhausted floating ions (CPFH) and the trap voltage (Vt) have an exhausted floating ion quantity - trap voltage characteristic in which the quantity of the exhausted floating ions (CPFH) increases as the trap voltage (Vt) decreases;
wherein the detection section (10) is further configured that, as the flow rate of the compressed air (AK) jetted from the nozzle (31N) decreases, the lowest prevention voltage (VtC) decreases, and that a range in which the exhausted floating ion quantity - trap voltage characteristic is attained shifts toward a side where the trap voltage (Vt) is low;
**characterized in that** the particulate detection system (1) comprises
index detection means (S54 - S5C) configured to change the trap voltage (Vt) to obtain an index trap voltage (Vt1-2) which is a trap voltage (Vt) corresponding to a predetermined quantity including 0 of the exhausted floating ions (CPFH), and
determination means (S5F) configured to determine whether or not the index trap voltage (Vt1-2) is higher than a permissible voltage (Vtmin) which is a preselected voltage for determination whether clogging has occurred or not.

2. A particulate detection system (1) according to claim 1, wherein
the circuits (210, 240, 230) include a signal current detection circuit (230) for detecting a signal current (Is) which changes in accordance with the quantity of the exhausted floating ions (CPFH) and the quantity of the electrified particulates (SC) exhausted from the exhaust port (43O);
wherein the index detection means (S54 - S5C) is configured such that the index trap voltage (Vt1-2) which is obtained by changing the trap voltage (Vt) with index detection means (S54 - S5C), is a 1-2 index trap voltage (Vt1-2) which is lower than the lowest prevention voltage (VtC) and at which the signal current (Is) detected by the signal current detection circuit (230) falls within a range between a first threshold value (Is1) and a second threshold value (Is2) which second threshold value (Is2) is larger than the first threshold value (Is1);
wherein the index detection means (S54 - S5C) changes the trap voltage (Vt) and obtains the 1-2 index trap voltage (Vt1-2) by using the signal current (Is) detected by the signal current detection circuit (230); and wherein
the determination means (S5F) determines whether or not the obtained 1-2 index trap voltage (Vt1-2) is higher than the permissible voltage (Vtmin).

3. A particulate detection system (1) according to claim 1 or 2, wherein the gas (EG) is exhaust gas (EG) flowing through an exhaust pipe (EP), and the detection section (10) is attached to the exhaust pipe (EP).

## Patentansprüche

1. Ein Partikeldetektionssystem (1) zum Detektieren einer Partikelmenge (S), die in einem Gas (EG) enthalten sind, umfassend:
eine Detektionssektion (10), die mit dem Gas (EG) in Kontakt kommt;
Schaltkreise (210, 240, 230) zum Ansteuern der Detektionssektion (10) und zum Erfassen der Partikelmenge (S); und
einen Druckluftport (70), in den Druckluft (AK) strömt;
wobei die Detektionssektion (10) folgendes enthält:
eine lonengasstrahlquelle (11), die Ionen (CP) durch Gasentladung erzeugt und ein Düsenelement (31) aufweist, das eine Düse (31N) zum Ausstoßen der erzeugten Ionen (CP) zusammen mit der durch den Druckluftport (70) verdichteten Druckluft (AK) bildet;
eine Partikelelektrifizierungssektion (12), die eine Einlassport (33I) zum Einführen des Gases (EG) in die Partikelelektrifizierungssektion (12) aufweist, die eine Mischregion (MX) definiert, wo das Gas (EGI), welches durch den Einlassport (33I) eingeführt wird mit den Ionen (CP) gemischt wird, die von der lonengasstrahlquelle (11) ausgestoßen werden, wodurch die Ionen (CP) an den Partikeln (S) in dem eingebrachten Gas (EGI) haften und elektrifizierte Partikel (SC) erzeugt werden,
der Partikelelektrifizierungsabschnitt (12) weist einen
Abgasport (430) zum Ausstoßen der elektrifizierten Partikel (SC) zusammen mit dem eingeführten Gas (EGI) auf, und
bildet eine Sammelelektrode (42), die auf einem Sammelelektrodenpotential (PV1) gehalten wird und schwebende Ionen (CPF) sammelt, welches Ionen (CP) sind, die nicht an den Partikeln (S) anhaften; und
eine Hilfselektrode (53), die in dem Partikelelektrifizierungsabschnitt (12) angeordnet ist, die mit einer variablen Hilfselektroden-Stromversorgungsschaltung (240) verbunden ist, die eine der Schaltkreise (210, 240, 230) bildet und auf einem Hilfselektrodenpotential (PV3) gehalten wird, und die eine abstoßende Kraft auf die schwebenden Ionen (CPF) ausübt, um dadurch die Sammelelektrode (42) beim Sammeln der schwebenden Ionen (CPF) zu unterstützen, wobei
das Hilfselektrodenpotential (PV3) ein variables Potential ist, das in Bezug auf das Sammelelektrodenpotential (PV1) variiert und durch die variable Hilfselektroden-Stromversorgungsschaltung (240) erzeugt wird;
wobei die Detektionssektion (10) konfiguriert ist
zur Verhinderung der Erzeugung von ausgestoßenen schwebenden Ionen (CPFH), welches schwebende Ionen (CPF) sind, die aus dem Abgasport (430) ausgestoßen werden, ohne von der Sammelelektrode (42) gesammelt zu werden
in einem Zustand, in dem die Partikel (S) nicht in den Mischbereich (MX) fließen und eine Flussrate der Druckluft (AK) und die Menge der Ionen (CP), die aus der Düse (31N) in Richtung des Mischbereich (MX) ausgestoßen werden konstant ist,
wenn in diesem Zustand eine Fallenspannung (Vt), die eine Potentialdifferenz zwischen dem Hilfselektrodenpotential (PV3) und dem Sammelelektrodenpotential (PV1) ist, auf eine Spannung gleich oder höher als eine niedrigste Verhinderungsspannung (VtC) eingestellt ist;
und wobei die Detektionssektion (10) konfiguriert ist, dass, wenn in diesem Zustand die Fallenspannung (Vt) auf eine Spannung niedriger als die niedrigste Verhinderungsspannung (VtC) gesetzt wird, die Menge der ausgestoßenen schwebenden Ionen (CPFH) und die Fallenspannung (Vt) eine ausgestoßene schwebende lonenmengen Fallenspannungscharakteristik aufweisen, in der die Menge der ausgestoßenen schwebenden Ionen (CPFH) zunimmt, wenn die Fallenspannung (Vt) abnimmt;
wobei die Detektionssektion (10) ferner so konfiguriert ist, dass,
wenn die Strömungsrate der von der Düse (31N) ausgestoßenen Druckluft (AK) abnimmt, die niedrigste Verhinderungsspannung (VtC) abnimmt, und ein Bereich, in dem die ausgestoßene schwebende lonenmengen Fallenspannungscharakteristik erreicht wird, sich zu einer Seite verschiebt, wo die Fallenspannung (Vt) niedrig ist;
**dadurch gekennzeichnet, dass**
das Partikeldetektionssystem (1) umfasst
Indexdetektionsmittel (S54-S5C), das konfiguriert ist, die Fallenspannung (Vt) zu ändern, um eine Indexfallenspannung (Vt1-2) zu erhalten, die eine Fallenspannung (Vt) ist, die einer vorbestimmten Menge, inklusive 0, der ausgestoßenen schwebenden Ionen entspricht (CPFH), und
ein Bestimmungsmittel (S5F), das konfiguriert ist, um zu bestimmen, ob die Indexfallenspannung (Vt1-2) höher ist als eine zulässige Spannung (Vtmin), die eine vorgewählte Spannung ist, um zu bestimmen, ob eine Verstopfung aufgetreten ist oder nicht.

2. Partikeldetektionssystem (1) nach Anspruch 1, wobei
die Schaltkreise (210, 240, 230) eine Signalstromdetektionsschaltung (230) zum Detektieren eines Signalstroms (Is) enthalten, der sich entsprechend der Menge der ausgestoßenen schwebenden Ionen (CPFH) und der Menge der elektrifizierten Partikel (SC) die aus dem Abgasport (430) ausgestoßen werden, verändert;
wobei das Indexdetektionsmittel (S54 - S5C) so konfiguriert ist, dass die Indexfallenspannung (Vt1-2), die durch Ändern der Fallenspannung (Vt) mit dem Indexdetektionsmittel (S54 - S5C) erhalten wird, eine 1-2 Index Fallenspannung (Vt1-2) ist, die niedriger als die niedrigste Verhinderungsspannung (VtC) ist und bei der der Signalstrom (Is), der durch die Signalstromdetektionsschaltung (230) erfasst wird, in einen Bereich zwischen einem ersten Schwellenwert (Is1) und einen zweiten Schwellenwert (Is2) liegt, welcher zweite Schwellenwert (Is2) größer als der erste Schwellenwert (Is1) ist;
wobei das Indexdetektionsmittel (S54-S5C) die Fallenspannung (Vt) ändert und die 1-2 Index Fallenspannung (Vt1-2) unter Verwendung des von der Signalstromdetektionsschaltung (230) detektierten Signalstroms (Is) erhält; und
wobei das Bestimmungsmittel (S5F) bestimmt, ob die erhaltene 1-2 Index Fallenspannung (Vt1-2) höher als die zulässige Spannung (Vtmin) ist oder nicht.

3. Partikeldetektionssystem (1) nach Anspruch 1 oder 2, wobei das Gas (EG) ein Abgas (EG) ist, das durch ein Abgasrohr (EP) strömt, und der Detektionsabschnitt (10) an dem Abgasrohr angebracht ist (EP).

## Revendications

1. Système de détection de particules (1) destiné à détecter la quantité de particules (S) contenues dans un gaz (EG), comprenant :
une section de détection (10) qui vient en contact avec le gaz (EG),
des circuits (210, 240, 230) destinés à piloter la section de détection (10) et à détecter la quantité de particules (S), et
un orifice d'air comprimé (70) dans lequel circule de l'air comprimé (AK),
dans lequel la section de détection) inclut :
une source d'éjection de gaz ionisé (11) qui génère des ions (CP) par l'intermédiaire d'une décharge de gaz et qui comporte un élément de buse (31) formant une buse (31N) destinée à éjecter les ions (CP) générés en même temps que l'air comprimé (AK) s'étant écoulé au travers de l'orifice d'air comprimé (70),
une section d'électrification des particules (12) qui comporte un orifice d'admission (33I) destiné à introduire le gaz (EG) dans la section d'électrification des particules (12), qui définit une région de mélange (MX) où le gaz (EGI), introduit par l'intermédiaire de l'orifice d'admission (33I) est mélangé avec les ions (CP) éjectés de la source d'éjection de gaz ionisé (11), grâce à quoi les ions (CP) adhèrent aux particules (S) dans le gaz (EGI) introduit, et des particules électrifiées (SC) sont générées,
la section d'électrification des particules (12) comportant :
un orifice d'échappement (430) destiné à évacuer les particules électrifiées (SC) en même temps que le gaz (EGI) introduit, et
formant une électrode de recueil (42) qui est maintenue à un potentiel d'électrode de recueil (PV1) et qui recueille des ions (CPF) flottants qui sont des ions (CP) n'ayant pas adhéré aux particules (S), et
une électrode auxiliaire (53) qui est placée dans la section d'électrification des particules (12), qui est reliée à un circuit variable d'alimentation d'électrode auxiliaire (240), représentant l'un des circuits (210, 240, 230), et qui est maintenue à un potentiel d'électrode auxiliaire (PV3) ; et laquelle exerce une force de répulsion sur les ions (CPF) flottants pour assister ainsi l'électrode de recueil (42) à recueillir les ions (CPF) flottants, où
le potentiel d'électrode auxiliaire (PV3) est un potentiel variable qui change en relation avec le potentiel d'électrode de recueil (PV1) et qui est généré par le circuit variable d'alimentation d'électrode auxiliaire (240),
dans lequel la section de détection (10) est configurée pour :
empêcher la génération d'ions (CPFH) flottants évacués qui sont des ions (CPF) flottants évacués de l'orifice d'échappement (430) sans être recueillis par l'électrode de recueil (42),
dans un état tel que les particules (S) ne circulent pas dans la région de mélange (MX) et tel que le débit d'écoulement de l'air comprimé (AK), tout comme la quantité des ions (CP) éjectés de la buse (31N) vers la région de mélange (MX) sont constants,
dans lequel, dans ledit état, une tension de piège (Vt), représentant la différence de potentiel entre le potentiel d'électrode auxiliaire (PV3) et le potentiel d'électrode de recueil (PV1), est réglée à une tension supérieure ou égale à la tension de prévention (VtC) la plus basse,
et dans lequel la section de détection (10) est configurée de telle sorte que, dans ledit état, la tension de piège (Vt) est réglée à une valeur de tension inférieure à la tension de prévention (VtC) la plus basse, la quantité d'ions (CPFH) flottants éjectés et la tension de piège (Vt) présentent une caractéristique quantité d'ions flottants éjectés - tension de piège dans laquelle la quantité des ions (CPFH) flottants éjectés augmente à mesure que diminue la tension de piège (Vt),
dans lequel la section de détection (10) est en outre configurée de telle sorte que, à mesure que le débit d'écoulement de l'air comprimé (AK) éjecté de la buse (31N) diminue, la tension de prévention (VtC) la plus basse diminue, et de telle sorte que la plage dans laquelle la caractéristique quantité d'ions flottants éjectés - tension de piège est atteinte se décale dans un sens où la tension de piège (Vt) est basse,
**caractérisé en ce que** le système de détection de particules (1) comprend :
un moyen de détection d'index (S54 à S5C) configuré pour changer la tension de piège (Vt) afin d'obtenir une tension de piège (Vt1 - 2) d'index qui représente une tension de piège (Vt) correspondant à une quantité prédéterminée, incluant 0, des ions (CPFH) flottants éjectés, et
un moyen de détermination (S5F) configuré pour déterminer si la tension de piège (Vt1 - 2) d'index est ou non supérieure à une tension admissible (Vtmin) qui représente une tension présélectionnée en vue de la détermination de ce qu'une obstruction s'est produite ou non.

2. Système de détection de particules (1) selon la revendication 1, dans lequel :
les circuits (210, 240, 230) incluent un circuit de détection de signal (230) destiné à détecter un courant de signal (Is) qui change en fonction de la quantité d'ions (CPFH) flottants éjectés et de la quantité de particules électrifiées (SC) éjectés de l'orifice d'échappement (430),
dans lequel le moyen de détection d'index (S54 à S5C) est configuré de telle sorte que la tension de piège (Vt1 - 2) d'index qui est obtenue en modifiant la tension de piège (Vt) avec le moyen de détection d'index (S54 à S5C) soit une tension de piège (Vt1 - 2) d'index 1 - 2 qui est inférieure à la tension de prévention (VtC) la plus basse et à laquelle le courant de signal (Is), détecté par le circuit de détection de courant de signal (230), se trouve dans une plage située entre une première valeur de seuil (Is1) et une seconde valeur de seuil (Is2), ladite seconde valeur de seuil (Is2) étant plus grande que la première valeur de seuil (Is1),
dans lequel le moyen de détection d'index (S54 à S5C) modifie la tension de piège (Vt) et récupère la tension de piège (Vt1 - 2) d'index 1 - 2 en utilisant le courant de signal (Is) détecté par le circuit de détection de courant de signal (230), et dans lequel
le moyen de détermination (S5F) définit si la tension de piège (Vt1 - 2) d'index 1 - 2 obtenue est ou non supérieure à la tension admissible (Vtmin).

3. Système de détection de particules (1) selon la revendication 1 ou la revendication 2, dans lequel le gaz (EG) est un gaz (EG) d'échappement s'écoulant au travers d'un tuyau d'échappement (EP), et dans lequel la section de détection (10) est fixée au tuyau d'échappement (EP).
